(19) **Europäisches Patentamt / European Patent Office / Office européen des brevets**

(11) **EP 4 750 221 A1**

(12) **EUROPEAN PATENT APPLICATION**
published in accordance with Art. 153(4) EPC

(43) Date of publication:
**27.05.2026 Bulletin 2026/22**

(21) Application number: **23945844.1**

(22) Date of filing: **18.07.2023**

(51) International Patent Classification (IPC):
**H04W 88/10** $^{(2009.01)}$　　**H04W 16/14** $^{(2009.01)}$
**H04W 72/1268** $^{(2023.01)}$　　**H04W 72/541** $^{(2023.01)}$

(52) Cooperative Patent Classification (CPC):
**H04W 16/14; H04W 72/1268; H04W 72/541;
H04W 88/10**

(86) International application number:
**PCT/JP2023/026303**

(87) International publication number:
**WO 2025/017841 (23.01.2025 Gazette 2025/04)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **NTT DOCOMO, INC.**
**Tokyo 100-6150 (JP)**

(72) Inventors:
• **SHIBAIKE, Naoya**
**Tokyo 100-6150 (JP)**

• **OKUMURA, Mamoru**
**Tokyo 100-6150 (JP)**
• **OKANO, Mayuko**
**Tokyo 100-6150 (JP)**
• **YOSHIOKA, Shohei**
**Tokyo 100-6150 (JP)**
• **NAGATA, Satoshi**
**Tokyo 100-6150 (JP)**

(74) Representative: **Hoffmann Eitle**
**Patent- und Rechtsanwälte PartmbB**
**Arabellastraße 30**
**81925 München (DE)**

(54) **TERMINAL AND COMMUNICATION METHOD**

(57) A terminal includes: a communication unit configured to communicate with a base station corresponding to a certain MNO (Mobile network operator) among a plurality of MNOs that perform frequency band sharing; and a control unit configured to, in a case where a transmission or reception to or from the base station overlaps with a resource that is unused in order to avoid interference with MNOs of the plurality of MNOs other than the certain MNO, drop or postpone the transmission or reception.

FIG.13

## Description

TECHNICAL FIELD

The present invention relates to a terminal and a communication method in a wireless communication system.

BACKGROUND ART

In 3GPP (registered trademark) (3rd Generation Partnership Project), in order to realize further larger system capacity, further faster data transmission speed, further lower latency in a wireless communication section, etc., a wireless communication method called "5G" or "NR (New Radio)" is being discussed (hereinafter, the wireless communication method is referred to as "NR"). In 5G, various wireless technologies and network architectures are being discussed to satisfy the requirements of a radio link delay of 1 ms or less while achieving throughput of 10 Gbps or more (e.g., Non-Patent Document 1 and Non-Patent Document 2).

In addition, various requirements for the next generation "6G" are being discussed. For example, the requirements include the ultra broadband communication, the mission critical communication, the ultra massive connection, the universal coverage, the intelligent connection, the ubiquitous sensing, and the like.

In order to satisfy the above-described requirements, as a new concept, the goals are set to being extensible (for example, capable of being effectively used in the future), customizable (for example, capable of being easily operational), and sustainable (for example, capable of reducing cost, and capable of having a robust structure).

CITATION LIST

Non-Patent Literature

Non-Patent Literature 1: 3GPP TS 38.300 V17.5.0 (2023-06)
Non-Patent Literature 2: 3GPP TS 38.401 V17.5.0 (2023-06)

SUMMARY OF INVENTION

TECHNICAL PROBLEM

In order to reduce the station installation cost, the frequency band sharing (Spectrum sharing) by a plurality of TRPs (Transmission reception points) even in the licensed band is being discussed. However, in a case where a plurality of TRPs share a frequency band, there may be a problem in the deployment depending on the site arrangement.

In view of the above-described points, the present invention has been made to implement the frequency band sharing by a plurality of TRPs (Transmission reception points) in the wireless communication system.

SOLUTION TO PROBLEM

According to the disclosed technique, a terminal is provided. The terminal includes: a communication unit configured to communicate with a base station corresponding to a certain MNO (Mobile network operator) among a plurality of MNOs that perform frequency band sharing; and a control unit configured to, in a case where a transmission or reception to or from the base station overlaps with a resource that is unused in order to avoid interference with MNOs of the plurality of MNOs other than the certain MNO, drop or postpone the transmission or reception.

ADVANTAGEOUS EFFECTS OF INVENTION

According to the disclosed technique, a plurality of TRPs (Transmission reception points) can share the frequency band.

BRIEF DESCRIPTION OF DRAWINGS

[Fig. 1] is a drawing illustrating a configuration example of a wireless communication system in an embodiment of the present invention.

[Fig. 2] is a drawing for describing an example of sharing in an embodiment of the present invention.

[Fig. 3] is a drawing for describing an example (1) of frequency band sharing in an embodiment of the present invention.

[Fig. 4] is a drawing for describing an example (2) of frequency band sharing in an embodiment of the present invention.

[Fig. 5] is a drawing for describing an example (3) of frequency band sharing in an embodiment of the present invention.

[Fig. 6] is a drawing for describing an example of sharing using frequency division multiplexing in an embodiment of the present invention.

[Fig. 7] is a drawing for describing an example of sharing using time division multiplexing in an embodiment of the present invention.

[Fig. 8] is a diagram for describing an example (1) of site arrangement in an embodiment of the present invention.

[Fig. 9] is a diagram for describing an example (2) of site arrangement in an embodiment of the present invention.

[Fig. 10] is a drawing for describing an example (1) of a communication in an embodiment of the present invention.

[Fig. 11] is a drawing for describing an example (2) of a communication in an embodiment of the present invention.

[Fig. 12] is a drawing for describing an example (3) of a communication in an embodiment of the present invention.

[Fig. 13] is a drawing for describing an example (4) of a communication in an embodiment of the present invention.

[Fig. 14] is a drawing illustrating an example of a functional structure of a base station 10 in an embodiment of the present invention.

[Fig. 15] is a drawing illustrating an example of a functional configuration of a terminal 20 in an embodiment of the present invention.

[Fig. 16] is a drawing illustrating an example of a hardware structure of the base station 10 or the terminal 20 in an embodiment of the present invention.

[Fig. 17] is a drawing illustrating an example of a structure of a vehicle 2001 in an embodiment of the present invention.

DESCRIPTION OF EMBODIMENTS

In the following, while referring to the drawings, one or more embodiments of the present invention will be described. It should be noted that the embodiments described below are examples. Embodiments of the present invention are not limited to the following embodiments.

In operations of a wireless communication system according to an embodiment of the present invention, a conventional technique will be used when it is appropriate. It should be noted that, although the conventional techniques may be the conventional LTE, the conventional techniques are not limited to the conventional LTE. Further, it is assumed that the term "LTE" used in the present specification has, unless otherwise specifically mentioned, a broad meaning including a scheme of LTE-Advanced and a scheme after LTE-Advanced (e.g., NR).

Furthermore, in one or more embodiments described below, terms that are used in the existing LTE are used, such as SS (Synchronization signal), PSS (Primary SS), SSS (Secondary SS), PBCH (Physical broadcast channel), PRACH (Physical random access channel), PDCCH (Physical Downlink Control Channel), PDSCH (Physical Downlink Shared Channel), PUCCH (Physical Uplink Control Channel), PUSCH (Physical Uplink Shared Channel), etc. The above-described terms are used for the sake of description convenience. Signals, functions, etc., which are similar to the above-described terms, may be referred to as different names. In addition, the above-described terms in NR correspond to NR-SS, NR-PSS, NR-SSS, NR-PBCH, NR-PRACH, etc. However, even when a signal is used for NR, the signal is not required to be referred to as "NR-".

In addition, in an embodiment of the present invention, the duplex method may be a TDD (Time Division Duplex) method, an FDD (Frequency Division Duplex) method, or any other method (e.g., Flexible Duplex, or the like).

Further, in an embodiment of the present invention, the expression that a radio parameter, or the like is "configured" may mean that a predetermined value is pre-configured, or may mean that a radio parameter indicated by a base station 10 or a terminal 20 is configured.

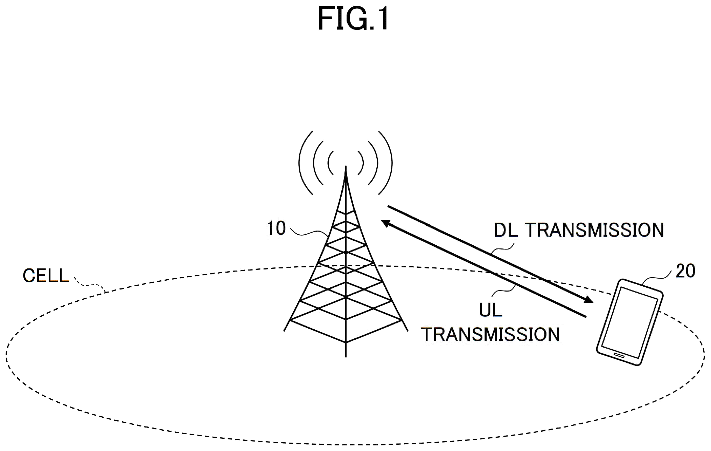

Fig. 1 is a drawing illustrating a configuration example of a wireless communication system according to an embodiment of the present invention. As illustrated in Fig. 1, a wireless communication system according to an embodiment of the present invention includes a base station 10 and a terminal 20. In Fig. 1, a single base station 10 and a single terminal 20 are illustrated as an example, but there may be a plurality of base stations 10 and a plurality of terminals 20.

The base station 10 is a communication device that provides one or more cells and performs wireless communication with the terminal 20. Physical resources of radio signals may be defined in the time domain and the frequency domain, the time domain may be defined by the number of OFDM (Orthogonal Frequency Division Multiplexing) symbols, and the frequency domain may be defined by the number of sub-carriers or resource blocks. The base station 10 transmits a synchronization signal and system information to the terminal 20. The synchronization signal is, for example, an NR-PSS and/or an NR-SSS. The system information may be transmitted via an NR-PBCH, and may be referred to as broadcast information. The synchronization signal and the system information may be referred to as an SSB (SS/PBCH block). As shown in Fig. 1, the base station 10 transmits a control signal or data in DL (Downlink) to the terminal 20 and receives a control signal or data in UL (Uplink) from the terminal 20. The base station 10 and terminal 20 are capable of transmitting and receiving a signal by performing the beamforming. Further, the base station 10 and the terminal 20 can both apply MIMO (Multiple Input Multiple Output) communication to DL or UL. Further, the base station 10 and the terminal 20 may both perform communications via a secondary cell (SCell: Secondary Cell) and a primary cell (PCell: Primary Cell) using CA (Carrier Aggregation). In addition, the terminal 20 may perform communications via a primary cell of the base station 10 and a primary secondary cell group cell (PSCell: Primary SCG Cell) of another base station 10 using DC (Dual Connectivity).

The terminal 20 may be a communication apparatus that includes a wireless communication function such as a smartphone, a mobile phone, a tablet, a wearable terminal, a communication module for M2M (Machine-to-Machine), or the like. As shown in Fig. 1, the terminal 20 uses various communication services provided by the wireless communication system by receiving control signals or data in DL from the base station 10 and transmitting control signals or data in UL to the base station 10. In addition, the terminal 20 receives various reference signals transmitted from the base station 10 and performs measurement of the propagation path quality based on the reception result of the reference signals.

In addition, various requirements for the next generation "6G" are being discussed. For example, the requirements include the ultra broadband communication, the mission critical communication, the ultra massive connection, the universal coverage, the intelligent connection, the ubiquitous sensing, and the like.

In order to satisfy the above-described requirements, as a new concept, the goals are set to being extensible (for example, capable of being effectively used in the future), customizable (for example, capable of being easily operational), and sustainable (for example, capable of reducing cost, and capable of having a robust structure).

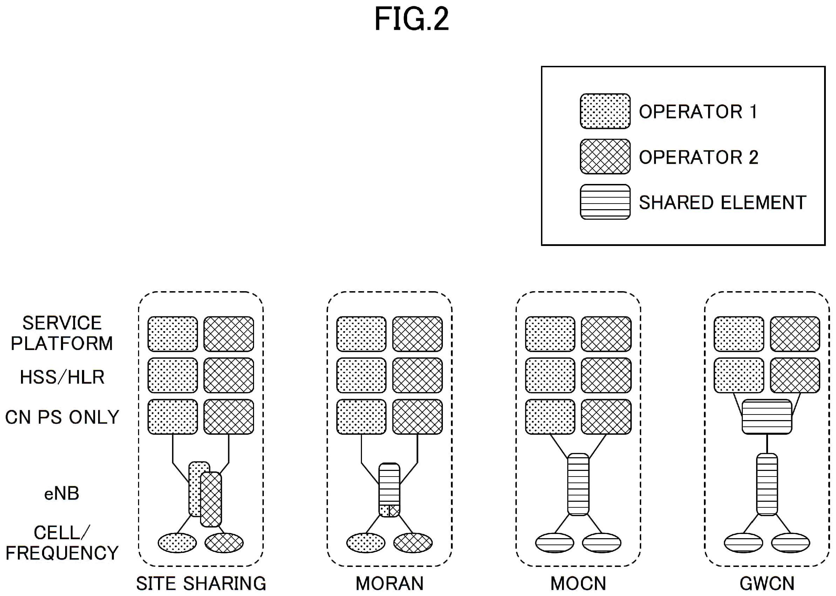

Fig. 2 is a drawing for describing an example of sharing in an embodiment of the present invention. In order to reduce the station installation cost, the sharing between a plurality of MNOs (Mobile network operators) illustrated in Fig. 2 is being discussed also for the deployment in the licensed band.

For example, the core network sharing has been discussed in LTE as shown in GWCN (Gateway core network) or MOCN (Multi-Operator Core Network) illustrated in Fig. 2. In the core network sharing, cells are shared and a different PLMN (Public Land Mobile Network) ID is allocated for a different operator.

For example, the RAN sharing has been discussed in LTE as shown in MORAN (Multi-Operators Radio Access Network) illustrated in Fig. 2. In the MORAN, the base station hardware is shared and a different cell is allocated for a different operator.

For example, the site sharing illustrated in Fig. 2 has been discussed in LTE. Sites are shared and a different base station is allocated for a different operator.

In addition, the communication using "unlicensed frequency (also referred to as unlicensed spectrum or unlicensed band)" (for example, also referred to as NR-U (NR unlicensed)) is being discussed in addition to the communication using licensed frequency (also referred to as licensed spectrum or licensed band) in 3GPP (for example, Release 16). In unlicensed frequencies, for example, the method of co-existence between different RATs or different operators is specified. As an example, in unlicensed frequencies, there may be a co-existence between NR-U and Wi-Fi (registered trademark), co-existence between NR-U and LTE License-Assisted Access (LTE-LAA), co-existence between NR-U of an operator A and NR-U of an operator B, etc. For example, 2.4 GHz, 5 GHz to 7 GHz, 57 GHz to 71 GHz or the like may be used for unlicensed frequencies.

It is to be noted that "operator" may mean, for example, a communication operator that uses a RAT. Different RATs may be used by different operators or by the same operator. In the following description, "operator" may mean, in addition to a "communication operator", a RAT that is used by a communication operator or may mean a communication device (for example, base station) that is used by the RAT.

In the future wireless communication systems, for example, communications using the "shared frequency band (shared spectrum)" in which frequencies are shared between operators that use the same RAT will be discussed in addition to the unlicensed frequencies.

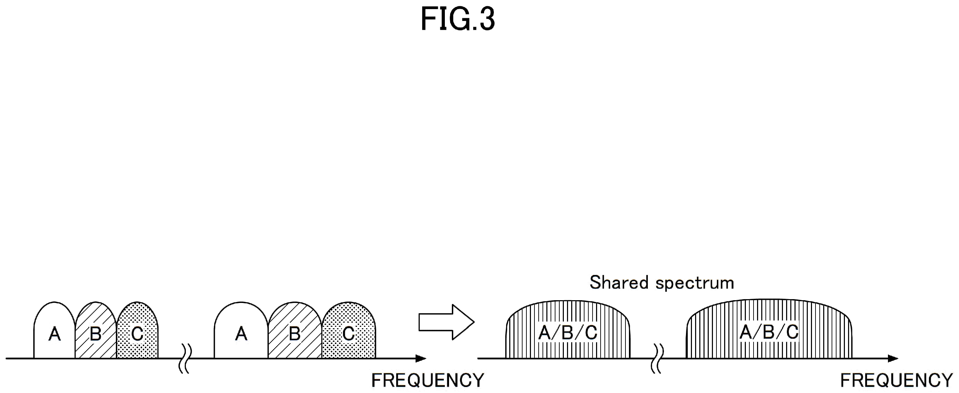

Fig. 3 is a drawing for describing an example (1) of frequency band sharing in an embodiment of the present invention. Fig. 3 illustrates an example in which frequencies are shared between a plurality of operators (for example, operators A, B, and C) by using the shared frequency band. For example, in the shared frequency band, the operators A, B, and C do not use frequencies that are separately allocated for each of the operators as illustrated on the left side of Fig. 3 and the operators A, B, and C use common frequencies between the operators as illustrated on the right side of Fig. 3. As illustrated in Fig. 3, by using the shared frequency band, there is a possibility that each operator can use wideband frequencies as compared with a case in which frequencies are separately allocated. For example, 2.3 GHz, 3.5 GHz or the like may be used for the shared frequency band.

There is a possibility that the operator co-existence methods (that is, the frequency sharing methods) may be different between the unlicensed frequencies and the shared frequency band.

In unlicensed frequencies, for example, there may be a case in which information cannot be shared between different RATs. As a result, for example, an operation that uses each RAT transmits a signal by using a resource that is not used by an operator that uses a different RAT, by sensing the unlicensed frequencies before the transmission. It is to be noted that the above-described sensing may be also referred to as Listen Before Talk (LBT) or Clear Channel Assessment (CCA). In addition, the communication method using the unlicensed frequencies may be also referred to as Licensed Assisted Access (LAA).

On the other hand, in the shared frequency band, for example, in a case where information can be shared as between the operators that use the same RAT, for example, the time synchronization between operators (hereinafter, also simply referred to as "synchronization" in short) can be implemented. By implementation of the time synchronization, the utilization efficiency of the shared frequency band can be improved as compared with that of the unlicensed frequencies.

Hereinafter, the communication method using the shared frequency band will be described.

[Synchronization between operators]

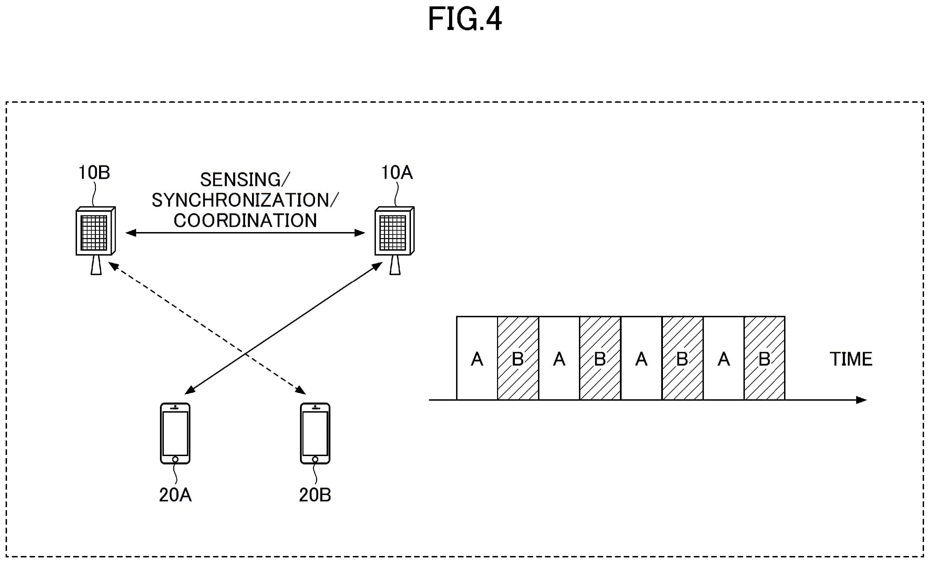

Fig. 4 is a drawing for describing an example (2) of frequency band sharing in an embodiment of the present invention. In the shared frequency band, for example, as illustrated in Fig. 4, the time synchronization may be implemented between a plurality of operators (for example, operators A and B). In other words, a plurality of operators may share the shared frequency band according to the coordination. In an example illustrated in Fig. 4, a terminal 20A communicates with a base station 10A of an operator A, and a terminal 20B communicates with a base station 10B of an operator B.

For example, in a case where the time synchronization between operators is implemented in the shared frequency band, each resource (for example, slot) in the shared frequency band is configured with a corresponding operator that can preferentially use the resource (hereinafter, referred to as "priority operator"). For example, resources in the shared frequency band may be semi-statically allocated to each operator. The priority operator can preferentially use the allocated resources. Hereinafter, such resources are referred to as "priority resources" for convenience.

In addition, for example, in a case where there is a priority resource that has not been used by a priority operator, the resource may be used by another operator (hereinafter, referred to as "non-priority operator") that is different from the priority operator. For example, in an example illustrated in Fig. 2, the operator A may use unused resources among the priority resources allocated to the operator B in addition to the priority resources allocated to the operator A. Conversely, the operator B may use unused resources among the priority resources allocated to the operator A in addition to the priority resources allocated to the operator B. Such use of unused resources by a non-priority operator may be referred to as "opportunistic use" for convenience.

In addition, for example, in the shared frequency band, a transmission signal of a priority operator may be spatially multiplexed with a transmission signal of a non-priority operator (SDM: Spatial Division Multiplexing). For example, with respect to a priority resource (for example, time resource) used by a priority operator, a non-priority operator may use a beam (in other words, unused beam) that is different from a beam used by the priority operator (in other words, spatial resource). According to the spatial division multiplexing, interference between a plurality of operators can be orthogonalized, and thus, the frequency utilization efficiency of the shared frequency band can be improved.

As described above, in the shared frequency band, the frequency utilization efficiency can be improved by implementation of the time synchronization between operators and by utilization of unused resources of a priority operator by a non-priority operator by finding an opportunity (in other words, opportunistically).

[Base station sharing between operators]

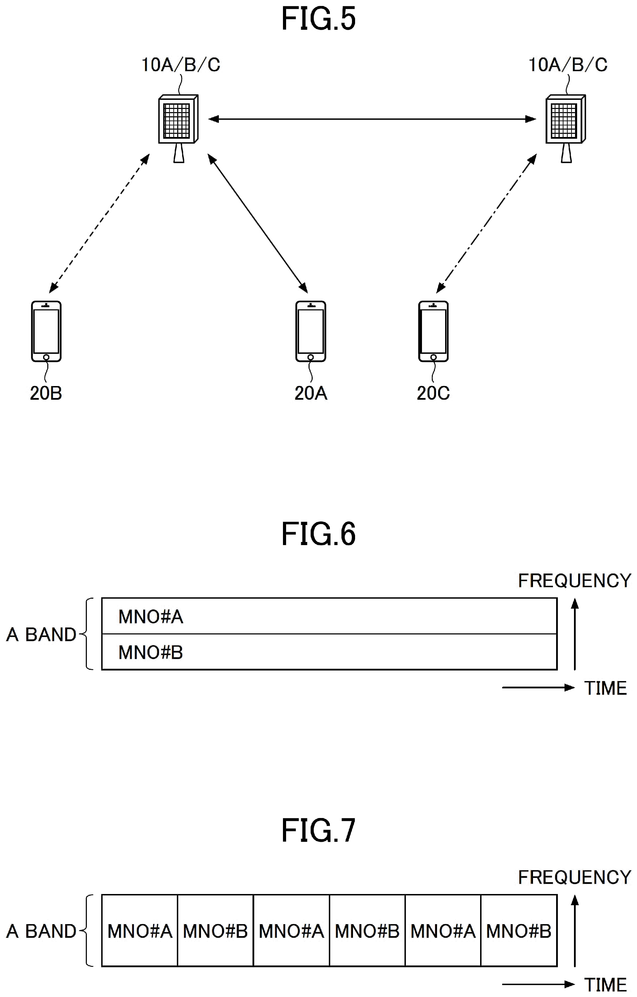

Fig. 5 is a drawing for describing an example (3) of frequency band sharing in an embodiment of the present invention. In the shared frequency band, for example, as illustrated in Fig. 5, a base station (for example, also referred to as a gNB) may be shared between a plurality of operators (for example, operators A, B, and C). In an example illustrated in Fig. 5, a terminal 20A operated by an operator A, a terminal 20B operated by an operator B, and a terminal 20C operated by an operator C communicate with a base station that is shared by the operators A, B, and C.

By having a base station shared by a plurality of operators, for example, the above-described processing related to the time synchronization (or coordination) between operators is performed within the base station, and thus, communications between base stations can be omitted and the system complexity can be reduced.

As an example, the shared frequency band may be a frequency that is used at the time of a disaster (for example, a frequency for public safety). In this case, by having a base station shared by a plurality of operators, the station installation cost can be reduced as compared with a case in which each operator separately installs a base station.

A form of communication using the shared frequency band has been described above. It is to be noted that the use of the shared frequency band may be also referred to as spectrum sharing.

In order to implement the spectrum sharing between a plurality of MNOs, there are expected to be two approaches. One is frequency division multiplexing and the other is time division multiplexing.

Fig. 6 is a drawing for describing an example of sharing using frequency division multiplexing in an embodiment of the present invention. As illustrated in Fig. 6, the MNO#A and the MNO#B may implement spectrum sharing in a certain band by using the frequency division multiplexing.

Fig. 7 is a drawing for describing an example of sharing using time division multiplexing in an embodiment of the present invention. As illustrated in Fig. 7, the MNO#A and the MNO#B may implement spectrum sharing in a certain band by using the time division multiplexing.

In order to implement the spectrum sharing between a plurality of MNOs, there are expected to be two site arrangements.

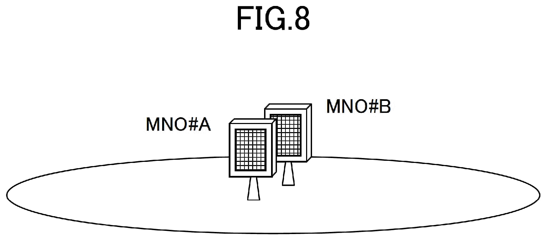

Fig. 8 is a diagram for describing an example (1) of site arrangement in an embodiment of the present invention. As illustrated in Fig. 8, the site arrangement in which the site locations are the same is referred to as "intra-site".

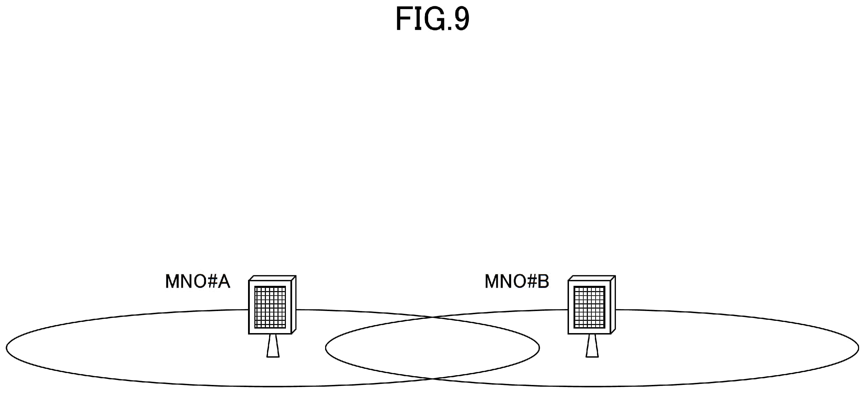

Fig. 9 is a diagram for describing an example (2) of site arrangement in an embodiment of the present invention. As illustrated in Fig. 9, the site arrangement in which the site locations are different and the coverages are partially overlapped is referred to as "inter-site".

In a case where the spectrum sharing is performed between a plurality of MNOs, a method of activating or deactivating a specific time and frequency domain resource is being discussed. The physical resources available for a UE of a certain MNO among the plurality of MNOs can be limited. For example, the operation is performed in an operation related to the shared frequency band and an operation of NR-IAB (Integrated access backhaul).

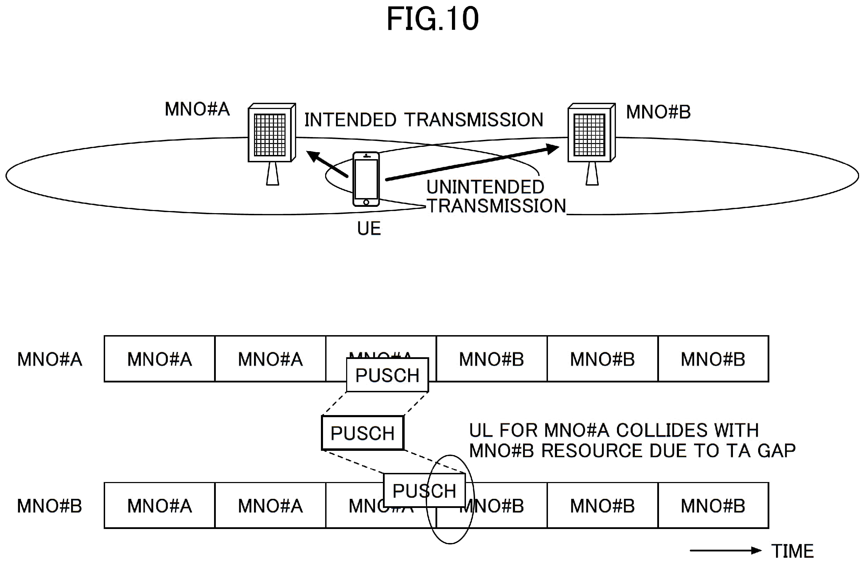

Fig. 10 is a drawing for describing an example (1) of a communication in an embodiment of the present invention. As illustrated in Fig. 10, at the time of inter-site, a UL transmitted with a certain TA (Timing Advance) in a certain site entering into another site at an unexpected timing is expected to create interference. Fig. 10 illustrates an example in which an unintended transmission to the MNO#B is performed when an intended transmission to the MNO#A is performed by the UE. As illustrated in Fig. 10, the UL for the MNO#A collides with a resource of the MNO#B because there is a gap between the TA of the MNO#A and the TA of the MNO#B.

As described above, in a case of the inter-site spectrum sharing, the TA required for each MNO is different, and thus, a UL for a resource of a certain MNO may provide interference to a resource of another MNO.

Accordingly, the following operation 1) to operation 5) may be performed. Each of the operations may be performed alone, or a freely selected combination of the operations may be performed.

Operation 1) A guard time may be defined in the available resources in the frequency band shared by a plurality of MNOs.

The unit of the guard time may be at least one of the following 1) to 5).

1) Radio frame
2) Subframe
3) Slot
4) Symbol (or OFDM symbol)
5) Second (seconds, milliseconds, microseconds)

The location of the guard time may be at least one of the following 1) to 3).

1) At the beginning of available resources in time domain
2) At the end of available resources in time domain
3) Anywhere in available resources

The determination and/or configuration of the guard time may be determined based on at least one of the following 1) to 4).

1) Definition by technical specifications.
2) Configuration by RRC signaling.
3) Indication by MAC-CE. In a case of the indication by MAC-CE, application of the indicated guard time may start at least after the ACK transmission corresponding to PDSCH carrying the MAC-CE.
4) Indication by DCI. In a case of the indication by DCI, application of the indicated guard time may start at least after the ACK transmission corresponding to the DCI, may start at least after the ACK transmission corresponding to PDSCH scheduled by the DCI, or may start at least after transmission of PUSCH scheduled by the DCI.

During the guard time, at least one of the following 1) or 2) may be performed.

1) Any DL transmission and any UL transmission are not allowed. For example, the UE is not required to expect that any reception or any transmission is to be performed. For example, the UE may ignore any scheduling indication or configuration that schedules DL or UL during the guard time.

2) Any UL transmission is not allowed. For example, the UE is not required to expect that any transmission is to be performed. For example, the UE is not required to expect that a UL symbol, a UL slot, or a UL transmission is to be configured during the guard time. The UE may ignore any UL scheduling indication that schedules UL during the guard time.

According to the above-described operation 1), a UL transmission intended for a certain MNO can be prevented from interfering with a resource of another MNO, without requiring signaling.

Operation 2) Report of information related to TAs for a plurality of MNOs may be defined. The UE may report the information to the network, that is, a base station of the connected MNO. The plurality of MNOs may share the frequency band, and the UE for which DL or UL is scheduled by the connected MNO base station may perform transmission or reception in the shared frequency band.

The information related to TAs for a plurality of MNOs may be at least one of the following 1) to 3), or may be a combination thereof.

1) TA (Timing Advance). The bit length indicating the TA may be 12 bits, may be 6 bits, or may be configurable according to RRC signaling, MAC-CE, or DCI.

2) Information for identifying an operator or network. For example, the information may be PLMN-ID.

3) The information may be a set of TA and PLMN-ID. The TA may be a TA for a base station corresponding to the PLMN-ID.

The report may be transmitted by using at least one of the following 1) to 4), or may be transmitted by using a combination thereof.

1) UCI carried by PUSCH.

2) UCI carried by PUCCH.

3) MAC-CE carried by PUSCH.

4) UL transmission other than the above-described 1), the above-described 2), and the above-described 3).

The condition for performing the report may be at least one of the following 1) to 3), or may be a combination thereof.

1) In a case where a periodic trigger occurs.

2) In a case of being triggered by a configuration or indication by the network.

3) In a case of being triggered by an event. For example, the event may be an event in which TA related to a certain PLMN-ID is updated, or may be an event in which TA related to PLMN-ID different from that of the connected MNO is updated.

An operation described in the following 1) to 3) may be performed.

1) The report is not required to be performed in a case where TA corresponding to an identifier (for example, PLMN-ID) of any MNO is not changed after the time point of the last report.

2) The report is not required to be performed in a case where the number of TAs configured or indicated by MNOs is equal to or less than 1.

3) In a case where the number of TAs configured or indicated by MNOs is 1, the UE may report the configured or indicated TA, or may report information indicating that other TAs are not configured. Based on the report, the network and/or gNB can determine that there is no other MNO that shares the frequency band.

According to the above-described operation 2), the network and/or gNB can obtain TAs required for the UE that performs transmission to other MNOs, and thus, the network and/or gNB can avoid the UL scheduling that causes interference with resources of other MNOs.

Operation 3) Whether or not to perform UL transmission in a specific resource may be determined based on information related to TAs for a plurality of MNOs. The plurality of MNOs may share the spectrum.

Whether or not to perform UL transmission in a specific resource may be determined based on the TA difference between the plurality of MNOs. In other words, the determination factor may be the TA difference between the plurality of MNOs.

The specific resource may be at least one of the following 1) or 2).

1) The beginning of the available resources.
2) The end of the available resources.

The unit for specifying the specific resource may be at least one of the following 1) to 5).

1) Radio frame
2) Subframe
3) Slot
4) Symbol (or OFDM symbol)
5) Second (seconds, milliseconds, microseconds)

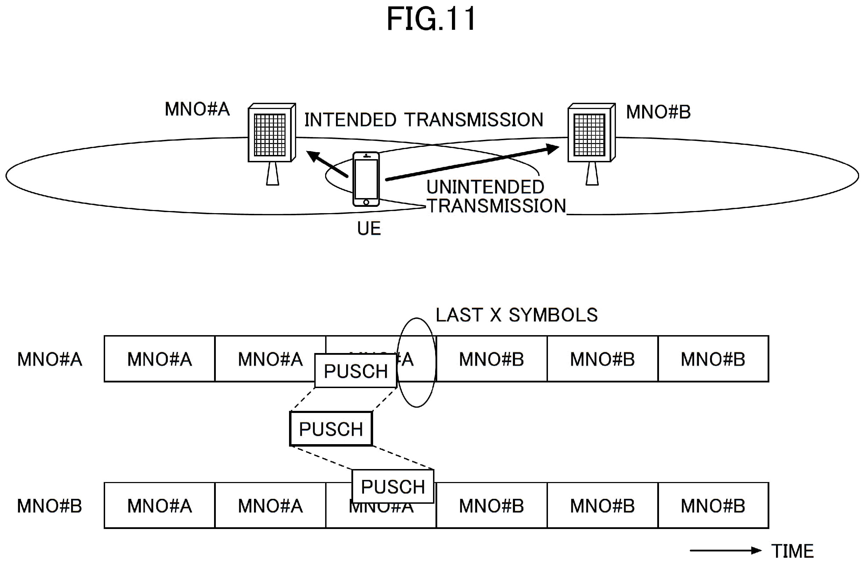

Fig. 11 is a drawing for describing an example (2) of a communication in an embodiment of the present invention. In a case where a certain condition is satisfied, as illustrated in Fig. 11, the UE is not required to perform UL transmission in X symbols at the end of the available resources. It is to be noted that, in Fig. 11, there are three contiguous slots of resources of the MNO#A, and there are subsequently three contiguous slots of resources of the MNO#B. The end of the available resources corresponds to the third slot of resources of the MNO#A in Fig. 11.

The certain condition is a case in which the following expression 1 is satisfied. It is to be noted that $TA_A$ is a TA corresponding to the connected PLMN-ID (that is, PLMN-ID corresponding to the connected MNO and/or cell) and $TA_B$ is a TA corresponding to another PLMN-ID (that is, PLMN-ID corresponding to another MNO).

$$[\mathrm{Expression\ 1}]$$
$$|TA_A - TA_B| > X \text{ and } TA_A - TA_B < 0$$

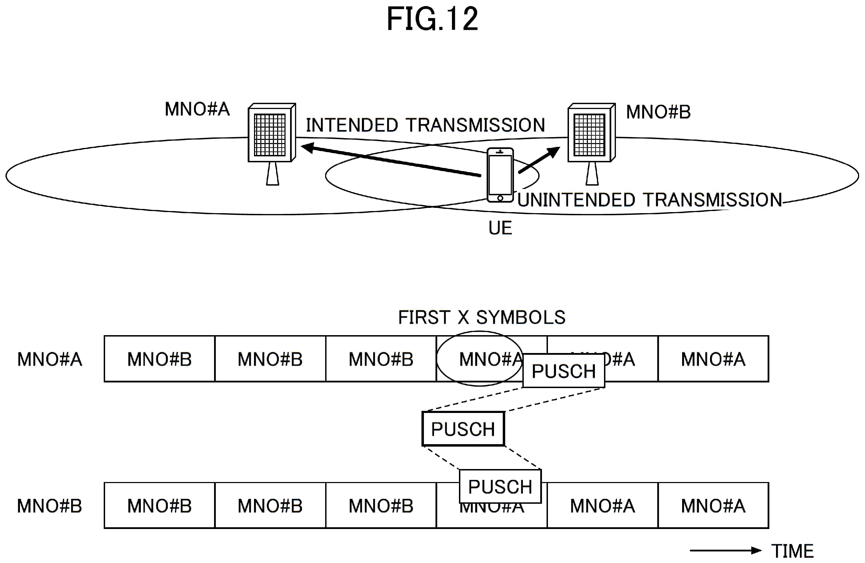

Fig. 12 is a drawing for describing an example (3) of a communication in an embodiment of the present invention. In a case where a certain condition is satisfied, as illustrated in Fig. 12, the UE is not required to perform UL transmission in X symbols at the beginning of the available resources. It is to be noted that, in Fig. 12, there are three contiguous slots of resources of the MNO#B, and there are subsequently three contiguous slots of resources of the MNO#A. The beginning of the available resources corresponds to the first slot of resources of the MNO#A in Fig. 12.

The certain condition is a case in which the following expression 2 is satisfied. It is to be noted that $TA_A$ is a TA corresponding to the connected PLMN-ID (that is, PLMN-ID corresponding to the connected MNO and/or cell) and $TA_B$ is a TA corresponding to another PLMN-ID (that is, PLMN-ID corresponding to another MNO).

$$[\mathrm{Expression\ 2}]$$
$$|TA_A - TA_B| > X \text{ and } TA_A - TA_B > 0$$

It is to be noted that, in a case where only a part of the scheduled UL transmission overlaps with the specific resource, all of the UL transmission may be dropped or only the part of the UL transmission may be dropped.

The amount of the specific resource may be determined based on at least one of the following 1) to 4).

1) Definition by technical specifications.
2) Configuration by RRC signaling.
3) Indication by MAC-CE. In a case of the indication by MAC-CE, application of the indicated guard time may start at least after the ACK transmission corresponding to PDSCH carrying the MAC-CE.
4) Indication by DCI. In a case of the indication by DCI, application of the indicated guard time may start at least after the ACK transmission corresponding to the DCI, may start at least after the ACK transmission corresponding to PDSCH scheduled by the DCI, or may start at least after transmission of PUSCH scheduled by the DCI.

According to the above-described Operation 3), UE can avoid the interference with resources of another MNO.

Operation 4) In a case where a DL reception and/or a UL transmission completely or partially overlaps with a specific resource, the UE may perform the reception and/or the transmission by using a specific method. It is to be noted that the overlap may be an overlap in the time domain.

The specific resource may be a guard time described in the above-described operation 1) or may a specific resource described in the above-described operation 3).

The specific method may be at least one of the following method 1) to method 4).

Method 1) The UE drops all of the reception and/or the transmission.
Method 2) The UE suspends or postpones all of the reception and/or the transmission.

Operation 3) The UE performs the reception and/or the transmission in a resource that is not included in the specific resource and drops the reception and/or the transmission in a resource that is included in the specific resource.
Operation 4) The UE performs the reception and/or the transmission in a resource that is not included in the specific resource and suspends or postpones the reception and/or the transmission in a resource that is included in the specific resource.

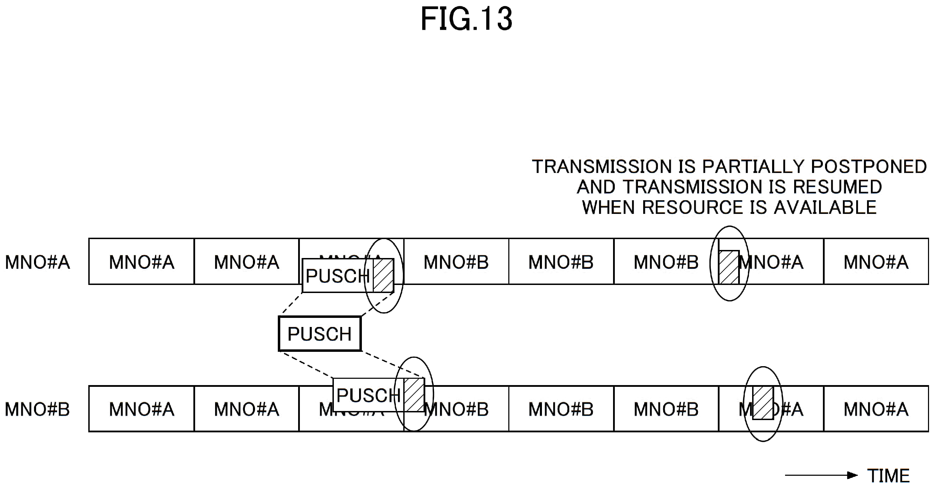

Fig. 13 is a drawing for describing an example (4) of a communication in an embodiment of the present invention. The reception and/or the transmission suspended or postponed in the above-described method 2) or the above-described method 4) may be resumed at the time point when resources of the connected MNO become available again as illustrated in Fig. 13.

In addition, the reception and/or the transmission suspended or postponed in the above-described method 2) or the above-described method 4) may be resumed at the time point when resources for the reception and/or the transmission are configured and/or indicated by the gNB and/or the network. The resources for the reception and/or the transmission configured and/or indicated by the gNB and/or the network are not required to be included in the specific resource.

In addition, the reception and/or the transmission suspended or postponed in the above-described method 2) or the above-described method 4) may be resumed at the time point when the DL resource and/or the UL resource for the connected MNO becomes available again.

According to the above-described operation 4), more efficient resource allocation can be performed by the gNB scheduler while the interference between a plurality of MNOs that perform spectrum sharing is reduced.

Operation 5) The UE may receive TA commands from a plurality of MNOs that perform spectrum sharing.

The signaling used for the TA allocation may be at least one of the following 1) to 4).

1) Msg2 PUSCH
2) DL MAC-CE (for example, TA command MAC-CE)
3) RRC configuration
4) DCI indication

The source of the signaling used for the TA allocation may be at least one of the following source 1) or source 2).

Source 1) One of the plurality of MNOs. For example, the UE may receive TA commands of the plurality of MNOs from an MNO corresponding to one PLMN-ID.
Source 2) Each of the plurality of MNOs. The source may be all of the MNOs. For example, the UE may receive a TA command from an MNO corresponding to each PLMN-ID.

As an example of the signaling used for the TA allocation applied to the source 1), one Msg2 PDSCH and/or TA command MAC-CE may carry a plurality of TA commands. Furthermore, a PLMN-ID corresponding to each TA command may be explicitly carried or a PLMN-ID corresponding to each TA command may be implicitly determined. In a case of implicit determination, a table indicating the mapping between PLMN-IDs and TA values may be configured by RRC signaling, or may be indicated by MAC-CE or DCI.

As an example of the signaling used for the TA allocation applied to the above-described source 1) and/or the above-described source 2), one of the following 1) or 2) may be applied based on the MNO or PLMN-ID.

> 1) The legacy signaling may be used for an indication of the TA command for the connected MNO. For example, TA command MAC-CE may be used.
>
> 2) The TA commands for MNOs other than the connected MNO may be indicated by using the RRC connection.

As an example of the signaling used for the TA allocation applied to the source 2), a Msg2 PDSCH and/or TA command MAC-CE corresponding to a certain single PLMN-ID may carry only a TA value for the PLMN-ID.

According to the above-described Operation 5), UE can obtain information used for reducing the interference.

According to an embodiment of the present invention, the network and/or gNB can obtain TAs required for the UE that performs transmission to other MNOs, and thus, the network and/or gNB can avoid the UL scheduling that causes interference with resources of other MNOs. In addition, the UE can avoid the interference with resources of other MNOs.

In other words, a plurality of MNOs (Mobile network operators) can share the frequency band in the wireless communication system.

(Device configuration)

Next, a functional configuration example of the base station 10 and the terminal 20 for performing the processes and operations described above will be described. The base station 10 and the terminal 20 include functions for implementing the embodiments described above. It should be noted, however, that each of the base stations 10 and the terminal 20 may include only some of the functions in an embodiment.

<Base station 10>

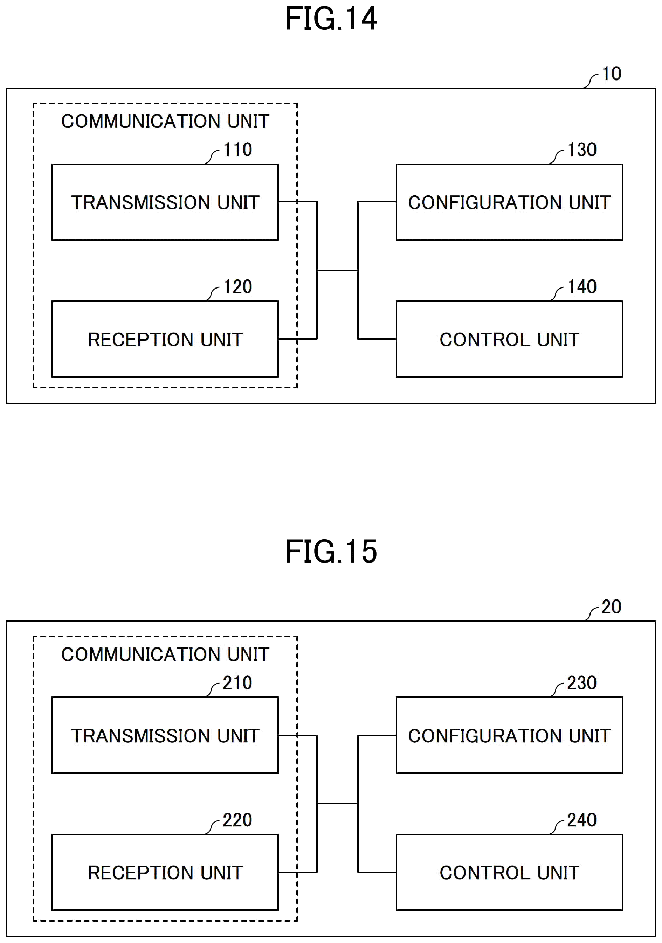

Fig. 14 is a drawing illustrating an example of a functional structure of a base station 10 according to an embodiment of the present invention. As shown in Fig. 14, the base station 10 includes a transmission unit 110, a reception unit 120, a configuration unit 130, and a control unit 140. The functional configuration illustrated in Fig. 14 is merely an example. Functional divisions and names of functional units may be anything as long as operations according to an embodiment of the present invention can be performed.

The transmission unit 110 includes a function for generating a signal to be transmitted to the terminal 20 side and transmitting the signal wirelessly. Further, the transmission unit 110 transmits an inter-network-node message to another network node. The reception unit 120 includes a function for receiving various signals transmitted from the terminal 20 and acquiring, for example, information of a higher layer from the received signals. In addition, the transmission unit 110 has a function of transmitting NR-PSS, NR-SSS, NR-PBCH, DL/UL control signals, and the like to the terminal 20. Further, the reception unit 120 receives an inter-network-node message from another network node.

The configuration unit 130 stores preset information and various configuration information items to be transmitted to the terminal 20. Contents of the configuration information are, for example, information related to the spectrum sharing configuration.

The control unit 140 performs control related to the spectrum sharing configuration as described in the embodiments. In addition, the control unit 140 performs scheduling. The functional units related to signal transmission in the control unit 140 may be included in the transmission unit 110, and the functional units related to signal reception in the control unit 140 may be included in the reception unit 120.

<Terminal 20>

Fig. 15 is a drawing illustrating an example of a functional structure of a terminal 20 according to an embodiment of the present invention. As shown in Fig. 15, the terminal 20 includes a transmission unit 210, a reception unit 220, a configuration unit 230, and a control unit 240. The functional configuration illustrated in Fig. 15 is merely an example. Functional divisions and names of functional units may be anything as long as operations according to an embodiment of the present invention can be performed.

The transmission unit 210 generates a transmission signal from transmission data and transmits the transmission signal wirelessly. The reception unit 220 receives various signals wirelessly and obtains higher layer signals from the received physical layer signals. In addition, the reception unit 220 has a function of receiving NR-PSS, NR-SSS, NR-PBCH, DL/UL/SL control signals, and the like, transmitted from the base station 10. In addition, for example, with respect to the D2D communications, the transmission unit 210 transmits, to another terminal 20, PSCCH (Physical Sidelink Control Channel), PSSCH (Physical Sidelink Shared Channel), PSDCH (Physical Sidelink Discovery Channel), PSBCH (Physical Sidelink Broadcast Channel), etc., and the reception unit 220 receives, from the another terminal 20, PSCCH, PSSCH, PSDCH, PSBCH, etc.

The configuration unit 230 stores various configuration information items received by the reception unit 220 from the base station 10. In addition, the configuration unit 230 also stores pre-configured configuration information. Contents of the configuration information are, for example, information related to the spectrum sharing configuration.

The control unit 240 performs control related to the spectrum sharing configuration as described in the embodiments. The functional units related to signal transmission in the control unit 240 may be included in the transmission unit 210, and the functional units related to signal reception in the control unit 240 may be included in the reception unit 220.

(Hardware structure)

The block diagrams that have been used to describe the above embodiments (Fig. 14 and Fig. 15) show blocks in functional units. These functional blocks (components) may be implemented in arbitrary combinations of at least one of hardware or software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, the functional block (component) to implement a function of transmission may be referred to as a transmitting unit or a transmitter. The method for implementing each component is not particularly limited as described above.

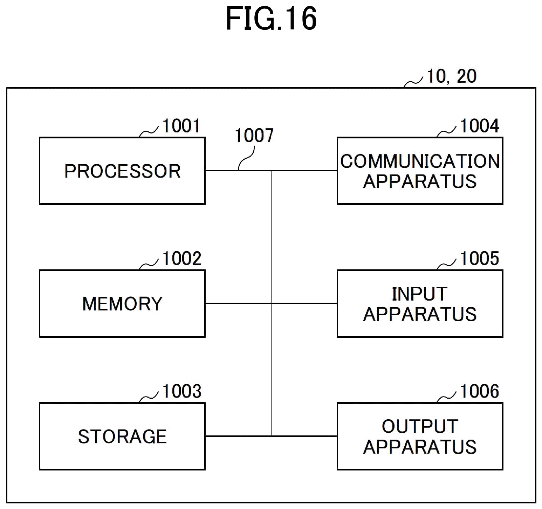

For example, the base station 10, the terminal 20, etc., according to an embodiment of the present disclosure may function as a computer for processing the radio communication method of the present disclosure. Fig. 16 is a diagram to show an example of a hardware structure of the base station 10 and the terminal 20 according to one embodiment. Physically, the above-described base station 10 and terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the terminal 20 may be configured to include one or more of apparatuses shown in the drawings, or may be configured not to include part of apparatuses.

Each function of the base station 10 and the terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading or writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described control unit 140, control unit 240, and so on may be implemented by the processor 1001.

Furthermore, the processor 1001 reads programs (program codes), software modules, data, or the like, from at least one of the storage 1003 and the communication apparatus 1004, into the memory 1002, and executes various processes according to these. As for the programs, programs to allow computers to execute at least part of the operations of the above-described embodiments are used. For example, the control unit 140 of the base station 10 illustrated in Fig. 14 may be implemented by control programs that are stored in the memory 1002 and that operate on the processor 1001. In addition, for example, the control unit 240 of the terminal 20 illustrated in Fig. 15 may be implemented by control programs that are stored in the memory 1002 and that operate on the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically Erasable Programmable ROM (EEPROM), a Random Access Memory (RAM), or other appropriate storage media. The memory 1002 may be referred to as a "register," a "cache," a "main memory (primary storage apparatus)" and so on. The memory 1002 can store executable programs (program codes), software modules, and the like for implementing the communication method according to one embodiment of the present disclosure.

The storage 1003 is a computer-readable recording medium, and may be constituted with, for example, at least one of a flexible disk, a floppy (registered trademark) disk, a magnetooptical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, or other appropriate storage media. The above recording medium may be a database including the memory 1002 and/or the storage 1003, a server, or any other appropriate medium.

The communication apparatus 1004 is hardware (transmitting/receiving device) for allowing inter-computer communication via at least one of wired or wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) or time division duplex (TDD). For example, the transmitting/receiving antenna, the amplifier unit, the transmitting/receiving unit, the transmission line interface, and the like, may be implemented by the communication apparatus 1004. The transmitting/receiving unit may be physically or logically divided into a transmitting unit and a receiving unit.

The input apparatus 1005 is an input device that receives input from the outside (for example, a keyboard, a mouse, a microphone, a switch, a button, a sensor, and so on). The output apparatus 1006 is an output device that outputs something to the outside (for example, a display, a speaker, an LED lamp). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

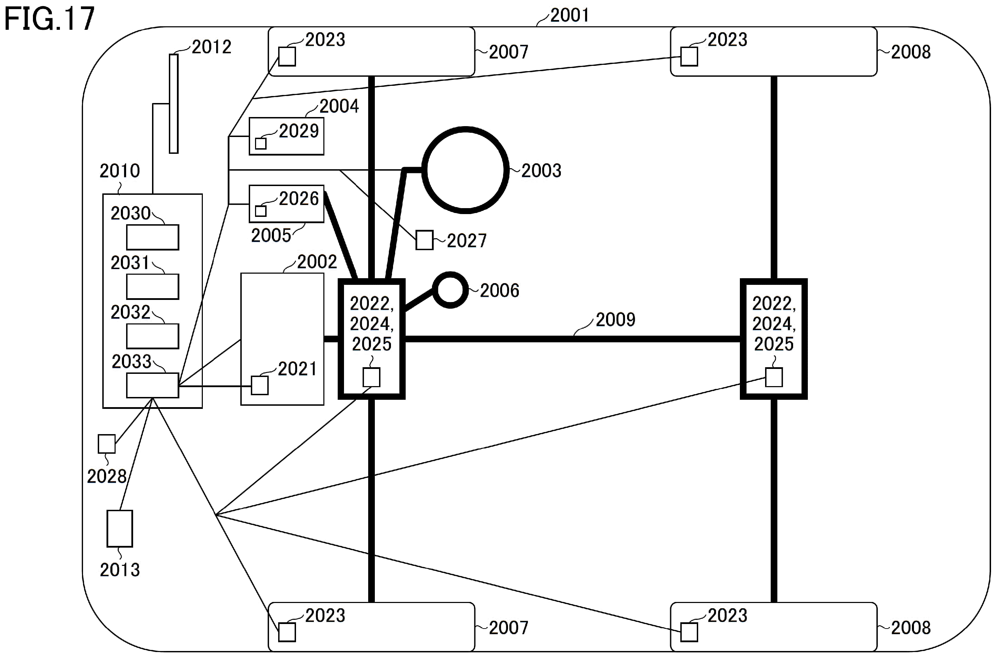

Fig. 17 shows an example of a configuration of a vehicle 2001. As shown in Fig. 17, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021-2029, an information service unit 2012, and a communication module 2013. The aspects/embodiments described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel or the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 that senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing (outputting) various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like. The information service unit 2012 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 can communicate with the microprocessor 2031 and components of the vehicle 2001 via a communication port. For example, the communication module 2013 transmits and receives data via a communication port 2033, to and from a drive unit 2002, a steering unit 2003, an accelerator pedal 2004, a brake pedal 2005, a shift lever 2006, front wheels 2007, rear wheels 2008, an axle 2009, a microprocessor 2031 and a memory (ROM, RAM) 2032 in the electronic control unit 2010, and sensors 2021 to 2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 may transmit at least one of signals from the various sensors 2021 to 2028 described above input to the electronic control unit 2010, information obtained based on the signals, and information based on an input from the outside (a user) obtained via the information service unit 2012, to the external apparatus via radio communication. The electronic control unit 2010, the various sensors 2021 to 2028, the information service unit 2012, and the like may be referred to as input units that receive input. For example, the PUSCH transmitted by the communication module 2013 may include information based on the input.

The communication module 2013 receives various types of information (traffic information, signal information, inter-vehicle information, etc.) transmitted from the external devices and displays the received information on the information service unit 2012 provided in the vehicle 2001. The information service unit 2012 may be referred to as an output unit that outputs information (for example, outputs information to devices, such as a display, a speaker, or the like, based on the PDSCH received by the communication module 2013 (or data/information decoded from the PDSCH)). In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021-2029, etc., mounted in the vehicle 2001.

(Embodiment summary)

As described above, according to an embodiment of the present invention, a terminal is provided. The terminal includes: a communication unit configured to communicate with a base station corresponding to a certain MNO (Mobile network operator) among a plurality of MNOs that perform frequency band sharing; and a control unit configured to, in a case where a transmission or reception to or from the base station overlaps with a resource that is unused in order to avoid interference with MNOs of the plurality of MNOs other than the certain MNO, drop or postpone the transmission or reception.

According to the above-described configuration, the more efficient resource allocation can be performed while reducing the interference between a plurality of MNOs that perform spectrum sharing. In other words, a plurality of MNOs (Mobile network operators) can share the frequency band in the wireless communication system.

The control unit may, in a case where a transmission or reception to or from the base station partially overlaps with a resource that is unused in order to avoid interference with MNOs of the plurality of MNOs other than the certain MNO, drop or postpone all of the transmission or reception. According to the above-described configuration, the more efficient resource allocation can be performed by the gNB scheduler while reducing the interference between a plurality of MNOs that perform spectrum sharing.

The control unit may, in a case where a transmission or reception to or from the base station partially overlaps with a resource that is unused in order to avoid interference with MNOs of the plurality of MNOs other than the certain MNO, partially drop or postpone the transmission or reception. According to the above-described configuration, the more efficient resource allocation can be performed by the gNB scheduler while reducing the interference between a plurality of MNOs that perform spectrum sharing.

The control unit may, in a case where the transmission or reception is partially postponed, resume the partially postponed transmission or reception at a time point when a resource for the certain MNO becomes available. According to the above-described configuration, the more efficient resource allocation can be performed by the gNB scheduler while reducing the interference between a plurality of MNOs that perform spectrum sharing.

The control unit may, in a case where the transmission or reception is partially postponed, resume the partially postponed transmission or reception at a time point when a downlink resource or an uplink resource for the certain MNO becomes available. According to the above-described configuration, the more efficient resource allocation can be performed by the gNB scheduler while reducing the interference between a plurality of MNOs that perform spectrum sharing.

In addition, according to an embodiment of the present invention, a communication method performed by a terminal is provided. The communication method includes: communicating with a base station corresponding to a certain MNO (Mobile network operator) among a plurality of MNOs that perform frequency band sharing; and in a case where a transmission or reception to or from the base station overlaps with a resource that is unused in order to avoid interference with MNOs of the plurality of MNOs other than the certain MNO, dropping or postponing the transmission or reception.

According to the above-described configuration, the more efficient resource allocation can be performed while reducing the interference between a plurality of MNOs that perform spectrum sharing. In other words, a plurality of MNOs (Mobile network operators) can share the frequency band in the wireless communication system.

(Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described related to an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may each be stored in a random access memory (RAM), a flash memory, a read only memory (ROM), an EPROM, an EEPROM, a register, a hard disk (HDD), a removable disk, a CD-ROM, a database, a server, or any other appropriate recording medium.

In addition, notification of information is by no means limited to the aspects/embodiments described in the present disclosure, and other methods may be used as well. For example, notification of information may be implemented by using physical layer signaling (for example, downlink control information (DCI), uplink control information (UCI)), higher layer signaling (for example, radio resource control (RRC) signaling, medium access control (MAC) signaling), broadcast information (master information block (MIB), system information block (SIB)), and other signals or combinations thereof. Also, RRC signaling may be referred to as an "RRC message," and can be, for example, an RRC connection setup message, an RRC connection reconfiguration message, and so on.

Each aspect/embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (new Radio), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, or a next generation system enhanced therefrom. In addition, a plurality of systems may be combined (for example, a combination of: at least one of LTE or LTE-A; and 5G, and the like) to be applied.

The order of processes, sequences, flowcharts, and so on that have been used to describe the aspects/embodiments in the present specification may be re-ordered as long as inconsistencies do not arise. For example, although various methods have been illustrated in the present disclosure with various components of steps in exemplary orders, the specific orders that are illustrated herein are by no means limiting.

Operations which have been described in the present specification to be performed by a base station 10 may, in some cases, be performed by an upper node of the base station 10. In a network including one or a plurality of network nodes with base stations 10, it is clear that various operations that are performed to communicate with terminals 20 can be performed by base stations 10, one or more network nodes (for example, Mobility Management Entities (MMEs), Serving-Gateways (S-GWs), and so on may be possible, but these are not limiting) other than base stations 10, or combinations of these. According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in the present disclosure may be implemented by a value (0 or 1) represented by one bit, by a Boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because various channels (e.g., PUCCH, PDCCH, or the like) and information elements may be identified by any suitable names, the various names assigned to these various channels and information elements are not used as limitations.

In the present disclosure, the terms "Base Station (BS)", "Radio Base Station", "Base Station Apparatus", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as the terms such as a "macro cell," a "small cell," a "femto cell," a "pico cell," and so on.

A base station can accommodate one or a plurality of (for example, three) cells. When a base station supports a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station or a base station subsystem that provides communication services within this coverage.

In the present disclosure, transmitting information to the terminal by the base station may be referred to as instructing the terminal to perform any control and/or operation based on the information by the base station.

In the present disclosure, terms such as "mobile station (MS)", "user terminal", "user equipment (UE)", "terminal", and the like, may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station or a mobile station may be referred to as a "transmitting apparatus," a "receiving apparatus," a "radio communication apparatus," and so on. Note that at least one of a base station or a mobile station may be a device mounted on a moving object or a moving object itself, and so on. The mobile station is an object that can move, and the moving speed can be any speed. In addition, a mobile station that is not moving is also included. Examples of the moving object include, but are not limited to, a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone (registered trademark), a multicopter, a quadcopter, a balloon, and an object mounted on any of these. The moving object may be a moving object that autonomously travels based on a direction for moving. The moving object may be a vehicle (for example, a car, an airplane, and the like), may be a moving object which moves unmanned (for example, a drone, an automatic operation car, and the like), or may be a robot (a manned type or unmanned type). Note that at least one of a base station or a mobile station also includes an apparatus which does not necessarily move during communication operation. For example, at least one of the base station or the mobile station may be an IoT (Internet of Things) device such as a sensor.

Furthermore, the base station in the present disclosure may be interpreted as a user terminal. For example, each aspect/embodiment of the present disclosure may be applied to the structure in which communications between a base station and a user terminal is replaced with communications between a plurality of terminals 20 (for example, which may be referred to as Device-to-Device (D2D), Vehicle-to-Everything (V2X), and the like). In this case, terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station may have the functions of the user terminal described above.

As used herein, the term "determining" may encompasses a wide variety of actions. For example, "determining" may be regarded as judging, calculating, computing, processing, deriving, investigating, looking up (search, inquiry) (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing, and the like. That is, "determining" may be regarded as a certain type of action related to determining. Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

A reference signal may be abbreviated as an "RS," and may be referred to as a "pilot," and so on, depending on which standard applies.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may have a fixed time length (for example, 1 ms) that does not depend on the numerology.

Numerology may be a communication parameter applied to at least one of transmission or reception of a certain signal or channel. The numerology may indicate at least one of, for example, subcarrier spacing (SCS), bandwidth, symbol length, cyclic prefix length, transmission time interval (TTI), number of symbols per TTI, radio frame configuration, specific filtering processing performed by the transceiver in the frequency domain, and specific windowing processing performed by the transceiver in the time domain.

The slot may include one or more symbols in the time domain (OFDM (Orthogonal Frequency Division Multiplexing) symbols, SC-FDMA (Single Carrier Frequency Division Multiple Access) symbols, and the like). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as PDSCH (or PUSCH) mapping type A. A PDSCH (or PUSCH) transmitted using a mini-slot may be referred to as PDSCH (or PUSCH) mapping type B.

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a transmission time interval, "TTI," a plurality of consecutive subframes may be referred to as a "TTI," or one slot or one mini-slot may be referred to as a "TTI." In other words, at least one of a subframe or a TTI may be a subframe (1 ms) in the conventional LTE, may be a period shorter than 1 ms (for example, 1 to 13 symbols), or may be a period longer than 1 ms. It is to be noted that the unit representing TTI may be referred to as a slot, a mini-slot, or the like, instead of a subframe.

Here, a TTI refers to the minimum time unit of scheduling in radio communication, for example. For example, in LTE systems, a base station performs, for each terminal 20, scheduling of allocating radio resources (such as a frequency bandwidth and transmission power that can be used by each terminal 20) in TTI units. It is to be noted that the definition of the TTI is not limited to the above-described definition.

The TTI may be a transmission time unit for channel-encoded data packets (transport blocks), code blocks, codewords, or the like, or may be a unit of processing in scheduling, link adaptation, or the like. It is to be noted that, when a TTI is provided, a time period (for example, the number of symbols) to which transport blocks, code blocks, codewords, or the like are actually mapped may be shorter than the TTI.

It is to be noted that, in a case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a normal TTI (TTI in LTE Rel. 8 to Rel. 12), a long TTI, a normal subframe, a long subframe, a slot, or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

It is to be noted that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and having a TTI length equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of the numerology, and may be 12, for example. The number of subcarriers included in an RB may be determined based on the numerology.

In addition, an RB may include one or a plurality of symbols in the time domain, and may have a length of one slot, one mini-slot, one subframe, or one TTI. One TTI, one subframe, and the like, may each be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource area including one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be identified by an RB index based on the common reference point of the carrier. PRBs may be defined by a certain BWP and may be numbered in the BWP.

A BWP may include a BWP for UL (UL BWP) and a BWP for DL (DL BWP). One or a plurality of BWPs may be configured in one carrier for UE.

At least one of configured BWPs may be active, and the UE is not required to expect to transmit/receive a certain signal/channel outside the active BWP. It is to be noted that that a "cell", a "carrier", or the like, in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

An aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

DESCRIPTION OF THE REFERENCE NUMERALS

    10 Base station
    110 Transmission unit
    120 Reception unit
    130 Configuration unit
    140 Control unit
    20 Terminal
    210 Transmission unit
    220 Reception unit
    230 Configuration unit
    240 Control unit
    1001 Processor
    1002 Memory
    1003 Storage
    1004 Communication apparatus
    1005 Input apparatus
    1006 Output apparatus

**Claims**

1. A terminal comprising:

    a communication unit configured to communicate with a base station corresponding to a certain MNO (Mobile network operator) among a plurality of MNOs that perform frequency band sharing; and
    a control unit configured to, in a case where a transmission or reception to or from the base station overlaps with a resource that is unused in order to avoid interference with MNOs of the plurality of MNOs other than the certain MNO, drop or postpone the transmission or reception.

2. The terminal as claimed in claim 1, wherein
    in a case where a transmission or reception to or from the base station partially overlaps with a resource that is unused in order to avoid interference with MNOs of the plurality of MNOs other than the certain MNO, the control unit drops or postpones all of the transmission or reception.

3. The terminal as claimed in claim 1, wherein
    in a case where a transmission or reception to or from the base station partially overlaps with a resource that is unused in order to avoid interference with MNOs of the plurality of MNOs other than the certain MNO, the control unit partially drops or postpones the transmission or reception.

4. The terminal as claimed in claim 3, wherein
    in a case where the transmission or reception is partially postponed, the control unit resumes the partially postponed transmission or reception at a time point when a resource for the certain MNO becomes available.

5. The terminal as claimed in claim 3, wherein
    in a case where the transmission or reception is partially postponed, the control unit resumes the partially postponed transmission or reception at a time point when a downlink resource or an uplink resource for the certain MNO becomes available.

6. A communication method performed by a terminal, the communication method comprising:

communicating with a base station corresponding to a certain MNO (Mobile network operator) among a plurality of MNOs that perform frequency band sharing; and
in a case where a transmission or reception to or from the base station overlaps with a resource that is unused in order to avoid interference with MNOs of the plurality of MNOs other than the certain MNO, dropping or postponing the transmission or reception.

# FIG.1

CELL

10

20

DL TRANSMISSION

UL
TRANSMISSION

EP 4 750 221 A1

# FIG.2

Legend:
- OPERATOR 1
- OPERATOR 2
- SHARED ELEMENT

SERVICE PLATFORM
HSS/HLR
CN PS ONLY
eNB
CELL/FREQUENCY

SITE SHARING    MORAN    MOCN    GWCN

EP 4 750 221 A1

# FIG.3

# FIG.4

EP 4 750 221 A1

# FIG.5

# FIG.6

# FIG.7

# FIG.8

# FIG.9

EP 4 750 221 A1

# FIG.10

MNO#A INTENDED TRANSMISSION MNO#B

UNINTENDED TRANSMISSION

UE

EP 4 750 221 A1

| MNO#A | MNO#A | MNO#A | MNO#A | MNO#B | MNO#B | MNO#B |

PUSCH

PUSCH

UL FOR MNO#A COLLIDES WITH MNO#B RESOURCE DUE TO TA GAP

PUSCH

| MNO#B | MNO#A | MNO#A | MNO#A | MNO#B | MNO#B | MNO#B |

TIME

# FIG.11

EP 4 750 221 A1

# FIG.12

MNO#A     INTENDED TRANSMISSION     MNO#B

UNINTENDED TRANSMISSION

UE

FIRST X SYMBOLS

| MNO#A | MNO#B | MNO#B | MNO#B | MNO#A | PUSCH | MNO#A | MNO#A |
|-------|-------|-------|-------|-------|-------|-------|-------|

PUSCH

| MNO#B | MNO#B | MNO#B | MNO#B | PUSCH MNO#A | MNO#A | MNO#A |
|-------|-------|-------|-------|-------|-------|-------|

TIME

# FIG.13

# FIG.14

# FIG.15

# FIG.16

FIG.17

## INTERNATIONAL SEARCH REPORT

| International application No. |
|---|
| **PCT/JP2023/026303** |

| A. | CLASSIFICATION OF SUBJECT MATTER |
|---|---|

*H04W 88/10*(2009.01)i; *H04W 16/14*(2009.01)i; *H04W 72/1268*(2023.01)i; *H04W 72/541*(2023.01)i
FI:  H04W88/10; H04W16/14; H04W72/1268; H04W72/541

According to International Patent Classification (IPC) or to both national classification and IPC

| B. | FIELDS SEARCHED |
|---|---|

Minimum documentation searched (classification system followed by classification symbols)

H04W4/00-H04W99/00 H04B7/24-H04B7/26

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

3GPP TSG RAN WG1-4, SA WG1-4, CT WG1, 4

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2019-537341 A (QUALCOMM INC.) 19 December 2019 (2019-12-19) | 1, 2, 6 |
|   | paragraphs [0018]-[0021], [0041], [0048] |   |
| A | paragraphs [0018]-[0021], [0041], [0048] | 3-5 |
| A | JP 2018-525872 A (QUALCOMM INC.) 06 September 2018 (2018-09-06) | 1-6 |
|   | paragraphs [0005]-[0022] |   |

☐ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **20 December 2023** | **09 January 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** |  |
|  | Telephone No. |

Form PCT/ISA/210 (second sheet) (January 2015)

International application No.

**PCT/JP2023/026303**

| Patent document cited in search report | | | Publication date (day/month/year) | Patent family member(s) | | | Publication date (day/month/year) |
|---|---|---|---|---|---|---|---|
| JP | 2019-537341 | A | 19 December 2019 | WO 2018/075351 A1 paragraphs [0025]-[0028], [0048], [0055] | | | |
| | | | | US 2018/0110056 | A1 | | |
| | | | | CN 109863774 | A | | |
| | | | | KR 10-2019-0068547 | A | | |
| JP | 2018-525872 | A | 06 September 2018 | WO 2017/003605 A1 paragraphs [0015]-[0026] | | | |
| | | | | US 2017/0006513 | A1 | | |
| | | | | EP 3457765 | A1 | | |
| | | | | CN 107810654 | A | | |
| | | | | KR 10-2018-0026409 | A | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *3GPP TS 38.300 V17.5.0*, June 2023
- *3GPP TS 38.401 V17.5.0*, June 2023